(19) Europäisches Patentamt
European Patent Office
Office européen des brevets

(11) **EP 4 703 126 A1**

(12) **EUROPEAN PATENT APPLICATION**
published in accordance with Art. 153(4) EPC

(43) Date of publication:
**04.03.2026 Bulletin 2026/10**

(21) Application number: **24796600.5**

(22) Date of filing: **11.03.2024**

(51) International Patent Classification (IPC):
***B29C 67/06*** (2017.01) ***A61K 8/02*** (2006.01)
***A61K 8/40*** (2006.01) ***A61K 8/73*** (2006.01)
***C08B 16/00*** (2006.01) ***C08J 5/18*** (2006.01)
***D01F 2/00*** (2006.01) ***D01F 2/02*** (2006.01)

(52) Cooperative Patent Classification (CPC):
**A61K 8/02; A61K 8/40; A61K 8/73; B29C 67/06; C08B 16/00; C08J 5/18; D01F 2/00; D01F 2/02**

(86) International application number:
**PCT/JP2024/009417**

(87) International publication number:
**WO 2024/224842 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.04.2023 JP 2023072282**
**17.08.2023 JP 2023133084**

(71) Applicant: **Futamura Kagaku Kabushiki Kaisha**
**Nakamura-ku**
**Nagoya-shi**
**Aichi 450-0002 (JP)**

(72) Inventors:
- **IWATA, Ippei**
  **Ogaki-shi, Gifu 503-0932 (JP)**
- **YAMAZAKI, Asuka**
  **Ogaki-shi, Gifu 503-0932 (JP)**

(74) Representative: **TBK**
**Bavariaring 4-6**
**80336 München (DE)**

(54) **CELLULOSE MOLDED BODY PRODUCTION METHOD AND CELLULOSE MOLDED BODY**

(57) Provided are a manufacturing method for a cellulose molded body, in which a low-crystalline cellulose molded body can be obtained by adjusting the molding conditions regardless of xylose concentration in constituent sugars of the cellulose material, and a cellulose molded body.

Included are a cellulose dissolution step of dissolving a cellulose material in a cellulose-dissolving agent to obtain a cellulose solution; a molding step of discharging the cellulose solution into an aqueous molding solution at 10 to 70°C comprising 20 to 50% of the cellulose-dissolving agent to produce a wet molded body; and a drying step of washing and then drying the wet molded body to obtain a cellulose molded body.

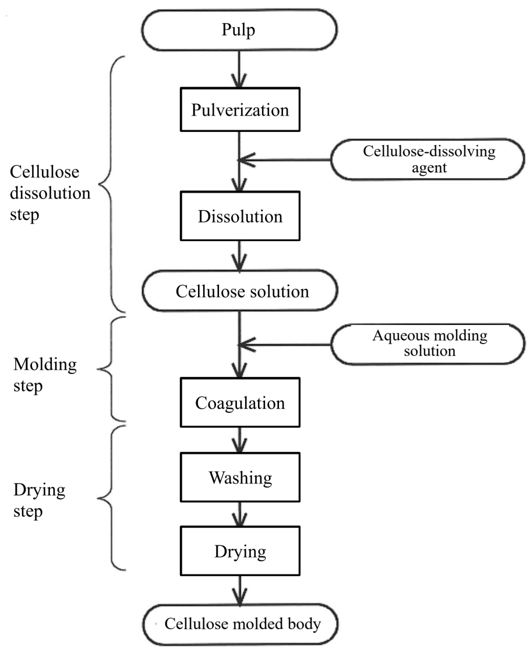


EP 4 703 126 A1

## Description

### FIELD

The present invention relates to a manufacturing method for a cellulose molded body and a cellulose molded body.

### BACKGROUND

Generally, cellulose is manufactured by the viscose method, wherein a cellulose material such as pulp is immersed in an alkali solution such as sodium hydroxide to form alkali cellulose, which is sulfurized with carbon disulfide and further subjected to alkali dissolution to generate viscose, and the viscose undergoes coagulation with an acid solution such as sulfuric acid. Cellulose manufactured as such is molded as appropriate molded bodies in fibrous form, film form, or spherical form depending on the shape at the time of coagulation, and is processed into various products such as paper products, clothing, and sanitary articles.

The viscose method involves many steps to prepare viscose from a cellulose material, requiring extensive equipment and processing times. In addition thereto, the use of alkali solutions, acid solutions, and hydrogen sulfide gives rise to issues such as the need for exhaust gas and waste liquid treatment, presenting challenges in terms of improving operational efficiency and reducing environmental impact. Since sulfurizing gases are present in the work environment due to processes such as sulfurization step, washing, and desulfurization, it is essential for workers to take safety measures such as wearing protective clothing.

A method for manufacturing a cellulose film by directly dissolving a cellulose material without undergoing a process of generating viscose from the cellulose material has been proposed (refer to, for example, PTL 1). In this manufacturing method, a cellulose material is dissolved with a mixed solvent comprising an ionic liquid of imidazolium salt and an aprotic polar solvent to form a cellulose solution, and then the cellulose solution undergoes coagulation to obtain a cellulose film. Accordingly, by reducing the number of steps, reduction in equipment load and improvement in operational efficiency are facilitated, and by removing a work environment where sulfurizing gases are present, improvement in safety measures and reduction in environmental impact are also facilitated.

A manufacturing method in which, when directly dissolving a cellulose material, a mixed solvent of tetrabutylammonium acetate, in place of the ionic liquid, and an aprotic polar solvent such as dimethyl sulfoxide is used has been proposed (refer to, for example, PTL 2, 3, and 4). For the mixed solvent used in this manufacturing method, since tetrabutylammonium acetate has high dissolution efficiency and low cost compared to the ionic liquid, improvement in productivity can be facilitated.

The above methods for manufacturing a cellulose molded body by directly dissolving a cellulose material are all manufacturing methods for a cellulose film. However, a cellulose molded body can be obtained in any appropriate form other than a film, such as fibrous form or spherical form. Among the obtained molded bodies, films are primarily used in packaging applications, fibers are primarily used in cosmetic and textile applications, and spheres (beads) are primarily used in cosmetic applications.

Generally, the appropriate characteristics are required depending on application, such as transparency and flexibility in cellulose molded bodies for cosmetic applications, dyeability in cellulose molded bodies for textile applications, and transparency in cellulose molded bodies for packaging applications. In these cellulose molded bodies, the refractive index of light differs between the crystalline portion and the non-crystalline portion of cellulose, and thus the higher the degree of crystallinity, the more light is diffusely reflected and the more transparency is decreased, whereas the lower the degree of crystallinity, the more transparency and flexibility are improved. Further, the non-crystalline portion allows easier impregnation of dyes and chemicals, and thus dyeability and chemical reactivity during post-processing is improved.

As a technique of obtaining a cellulose fiber having low crystallinity and satisfactory dyeability, a manufacturing method in which, as the cellulose raw material, pulp comprising a high concentration of a hemicellulose with xylose as a constituent sugar is used (refer to, for example, PTL 5). However, in the above manufacturing method, in order to obtain a low-crystalline cellulose fiber, it is necessary to adjust the xylose concentration in constituent sugars of the raw material itself, and arbitrarily adjusting the degree of crystallinity is difficult.

Since the cellulose fiber obtained by the manufacturing method above contains xylose as a constituent sugar in high concentration, for example, when used in sanitary articles such as nonwoven gauze, there is a possibility that safety standards for sanitary materials are not satisfied. According to medical nonwoven gauze standards in accordance with the test methods for nonwoven fabrics for medical use of JIS L 1912 (1997), regarding distillation residues, which is one of the chemical requirements, it is stipulated that when a nonwoven fabric is boiled in water and the resulting solution is evaporated, the weight of the substance that remains undistilled be 20.0 mg or less per 2 g of nonwoven fabric. In a fiber containing xylose as a constituent sugar in high concentration like the cellulose fiber obtained by the manufacturing method above, since xylose easily elutes into hot water, there is a risk of falling outside the standard for distillation residues.

The inventors have intensively studied manufacturing methods for a cellulose molded body in which crystallinity of cellulose can be controlled regardless of xylose concentration in constituent sugars of a raw material. As a result, an invention of a method in which a low-crystalline cellulose molded body can be obtained regardless of xylose concentration in constituent sugars of a raw material by adjusting the conditions of type, concentration, and temperature of the solution used when a dissolved cellulose material undergoes coagulation was completed.

[CITATION LIST]

[PATENT LITERATURE]

[PTL 1] Japanese Unexamined Patent Publication (Kokai) No. 2011-184541
[PTL 2] Japanese Unexamined Patent Publication (Kokai) No. 2015-074704
[PTL 3] Japanese Unexamined Patent Publication (Kokai) No. 2015-093876
[PTL 4] Japanese Unexamined Patent Publication (Kokai) No. 2016-196526
[PTL 5] Japanese Unexamined PCT Publication (Kohyo) No. 2021-517214

SUMMARY

[TECHNICAL PROBLEM]

The present invention has been made in view of the above points, and provides a manufacturing method for a cellulose molded body, in which a low-crystalline cellulose molded body can be obtained by adjusting the molding conditions regardless of xylose concentration in constituent sugars of a cellulose material, and a cellulose molded body.

[SOLUTION TO PROBLEM]

The first invention relates to a manufacturing method for a cellulose molded body, comprising a cellulose dissolution step of dissolving a cellulose material in a cellulose-dissolving agent to obtain a cellulose solution; a molding step of discharging the cellulose solution into an aqueous molding solution at 10 to 70°C comprising 20 to 50% of the cellulose-dissolving agent to produce a wet molded body; and a drying step of washing and then drying the wet molded body to obtain a cellulose molded body.
The second invention relates to the manufacturing method for a cellulose molded body in the first invention, wherein the cellulose material is pulp primarily composed of cellulose, and comprises 0.1 to 20% by weight of xylose as a constituent sugar.
The third invention relates to the manufacturing method for a cellulose molded body in the first or second invention, wherein the cellulose-dissolving agent contains tetraalkylammonium acetate represented by formula (Fi) below and an aprotic polar solvent, and wherein content ratio of the aprotic polar solvent is 55% by weight or greater.

[Chem. 1]

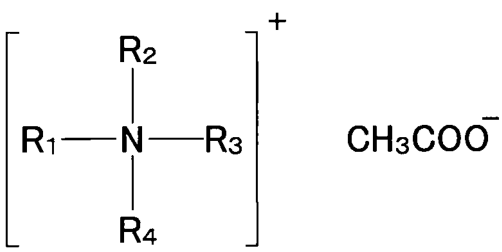
··· (F i)

wherein $R_1$, $R_2$, $R_3$, and $R_4$ each independently represent an alkyl group having 3 to 6 carbon atoms.
The fourth invention relates to the manufacturing method for a cellulose molded body in the third invention, wherein a Kamlet-Taft parameter of hydrogen bond accepting ability (β value) of the cellulose-dissolving agent is 0.8 to 1.3.
The fifth invention relates to the manufacturing method for a cellulose molded body in the third invention, wherein the tetraalkylammonium acetate is tetrabutylammonium acetate.
The sixth invention relates to the manufacturing method for a cellulose molded body in the third invention, wherein donor number of the aprotic polar solvent is 20 to 50.
The seventh invention relates to the manufacturing method for a cellulose molded body in the third invention,

wherein the aprotic polar solvent is at least one selected from amide-based solvents, sulfoxide-based solvents, and pyridine-based solvents.

The eighth invention relates to the manufacturing method for a cellulose molded body in the third invention, wherein the aprotic polar solvent is at least one selected from a group consisting of N,N-dimethylformamide, N,N-diethylformamide, N,N-dimethylacetamide, N,N-diethylacetamide, dimethyl sulfoxide, N-methyl-2-pyrrolidone, N,N'-dimethylpropyleneurea, 1,3-dimethyl-2-imidazolidinone, tetramethylurea, tetraethylurea, pyridine, 4-methylpyridine, and derivatives thereof.

The ninth invention relates to the manufacturing method for a cellulose molded body in the first invention, wherein the cellulose molded body is in a form among any of fibrous form, film form, and spherical form.

The tenth invention relates to the manufacturing method for a cellulose molded body in the third invention, wherein the cellulose molded body is in a form among any of fibrous form, film form, and spherical form.

The eleventh invention relates to the manufacturing method for a cellulose molded body in the eighth invention, wherein the cellulose molded body is in a form among any of fibrous form, film form, and spherical form.

The twelfth invention relates to a cellulose molded body obtained via a cellulose dissolution step of dissolving a cellulose material in a cellulose-dissolving agent to obtain a cellulose solution; a molding step of discharging the cellulose solution into an aqueous molding solution at 10 to 70°C comprising 20 to 50% of the cellulose-dissolving agent to produce a wet molded body; and a drying step of washing and then drying the wet molded body, wherein degree of crystallinity, represented by formula (i) below, of the cellulose molded body is 60% or less.

[Math. 1]

$$\text{Degree of crystallinity} = [(Ic - Ia1)/\{(Ic - Ia1 + Ia2)\}] \times 100\ (\%) \ldots (i)$$

Ic: diffraction intensity of crystal lattice plane ((1-10) plane, peak value near 2θ = 13°) of type II cellulose

Ia1: diffraction intensity at intersecting point between a straight line connecting diffraction intensities at 2θ = 8° and 15° and a straight line drawn vertically downward from 13°

Ia2: diffraction intensity of amorphous portion (2θ = 15°)

The thirteenth invention relates to the cellulose molded body in the twelfth invention, wherein the cellulose molded body comprises 0.1 to 20% by weight of xylose as a constituent sugar.

The fourteenth invention relates to the cellulose molded body in the twelfth or thirteenth invention, wherein the cellulose-dissolving agent contains tetraalkylammonium acetate represented by formula (Fi) above and an aprotic polar solvent, and wherein content ratio of the aprotic polar solvent is 55% by weight or greater.

The fifteenth invention relates to the cellulose molded body in the fourteenth invention, wherein a Kamlet-Taft parameter of hydrogen bond accepting ability (β value) of the cellulose-dissolving agent is 0.8 to 1.3.

The sixteenth invention relates to the cellulose molded body in the fourteenth invention, wherein the aprotic polar solvent is at least one selected from a group consisting of N,N-dimethylformamide, N,N-diethylformamide, N,N-dimethylacetamide, N,N-diethylacetamide, dimethyl sulfoxide, N-methyl-2-pyrrolidone, N,N'-dimethylpropyleneurea, 1,3-dimethyl-2-imidazolidinone, tetramethylurea, tetraethylurea, pyridine, 4-methylpyridine, and derivatives thereof.

[ADVANTAGEOUS EFFECTS OF INVENTION]

According to the manufacturing method for a cellulose molded body according to the first invention, a cellulose dissolution step of dissolving a cellulose material in a cellulose-dissolving agent to obtain a cellulose solution; a molding step of discharging the cellulose solution into an aqueous molding solution at 10 to 70°C comprising 20 to 50% of the cellulose-dissolving agent to produce a wet molded body; and a drying step of washing and then drying the wet molded body to obtain a cellulose molded body are included. Thus, by adjusting the molding conditions regardless of xylose concentration in constituent sugars of the cellulose material, a low-crystalline cellulose molded body can be provided.

According to the manufacturing method for a cellulose molded body according to the second invention, in the first invention, the cellulose material is pulp primarily composed of cellulose, and comprises 0.1 to 20% by weight of xylose as a constituent sugar. Thus, the use of a raw material having high cellulose purity that have not been used as raw material for low-crystalline cellulose molded bodies in the prior art is possible, and by broadening the selection range of raw materials used, applications of the resulting molded bodies can be expanded.

According to the manufacturing method for a cellulose molded body according to the third invention, in the first or second invention, the cellulose-dissolving agent contains tetraalkylammonium acetate and an aprotic polar solvent, and the content ratio of the aprotic polar solvent is 55% by weight or greater. Thus, the cellulose material can be uniformly dissolved in a short time, without being dependent on the crystal form of the cellulose material and without undergoing a pretreatment step, and fluidity of the cellulose solution obtained by dissolving the cellulose material can be increased.

According to the manufacturing method for a cellulose molded body according to the fourth invention, in the third invention, the Kamlet-Taft parameter of hydrogen bond accepting ability (β value) of the cellulose-dissolving agent is 0.8 to 1.3. Thus, the cellulose material can be uniformly dissolved in a short time, without being dependent on the crystal form of the cellulose material and without undergoing a pretreatment step, and fluidity of the cellulose solution obtained by dissolving the cellulose material can be increased.

According to the manufacturing method for a cellulose molded body according to the fifth invention, in the third invention, the tetraalkylammonium acetate is tetrabutylammonium acetate. Thus, dissolution efficiency of the cellulose material is excellent.

According to the manufacturing method for a cellulose molded body according to the sixth invention, in the third invention, the aprotic polar solvent has a donor number of 20 to 50, and thus has good compatibility with tetraalkylammonium acetate, and solubility of the cellulose material is satisfactory.

According to the manufacturing method for a cellulose molded body according to the seventh invention, in the third invention, the aprotic polar solvent is at least one selected from amide-based solvents, sulfoxide-based solvents, and pyridine-based solvents. Thus, solubility of the cellulose material is satisfactory.

According to the manufacturing method for a cellulose molded body according to the eighth invention, in the third invention, the aprotic polar solvent is at least one selected from the group consisting of N,N-dimethylformamide, N,N-diethylformamide, N,N-dimethylacetamide, N,N-diethylacetamide, dimethyl sulfoxide, N-methyl-2-pyrrolidone, N,N'-dimethylpropyleneurea, 1,3-dimethyl-2-imidazolidinone, tetramethylurea, tetraethylurea, pyridine, 4-methylpyridine, and derivatives thereof, and thus is low-cost, can be easily procured, and is advantageous in terms of economy and mass production.

According to the manufacturing method for a cellulose molded body according to the ninth invention, in the first invention, the cellulose molded body is in the form among any of fibrous form, film form, and spherical form. Thus, manufacturing and product processing of the molded body are easy.

According to the manufacturing method for a cellulose molded body according to the tenth invention, in the third invention, the cellulose molded body is in the form among any of fibrous form, film form, and spherical form. Thus, manufacturing and product processing of the molded body are easy.

According to the manufacturing method for a cellulose molded body according to the eleventh invention, in the seventh invention, the cellulose molded body is in the form among any of fibrous form, film form, and spherical form. Thus, manufacturing and product processing of the molded body are easy.

According to the cellulose molded body according to the twelfth invention, in a cellulose molded body obtained via a cellulose dissolution step of dissolving a cellulose material in a cellulose-dissolving agent to obtain a cellulose solution; a molding step of discharging the cellulose solution into an aqueous molding solution at 10 to 70°C comprising 20 to 50% of the cellulose-dissolving agent to produce a wet molded body; and a drying step of washing and then drying the wet molded body, the degree of crystallinity of the cellulose molded body is 60% or less. Thus, various properties such as wet transparency, flexibility, dyeability, and chemical reactivity at post-processing are satisfactory, and the cellulose molded body can be suitably used as a molding material for a wide variety of cellulose products depending on form.

According to the cellulose molded body according to the thirteenth invention, in the twelfth invention, the cellulose molded body comprises 0.1 to 20% by weight of xylose as a constituent sugar. Thus, in addition to a cellulose molded body having low cellulose purity, a cellulose molded body having high cellulose purity that complies with various safety standards can also be provided.

According to the cellulose molded body according to the fourteenth invention, in the twelfth or thirteenth invention, the cellulose-dissolving agent contains tetraalkylammonium acetate and an aprotic polar solvent, and the content ratio of the aprotic polar solvent is 55% by weight or greater. Thus, the cellulose material can be uniformly dissolved in a short time, without being dependent on the crystal form of the cellulose material and without undergoing a pretreatment step, and fluidity of the cellulose solution obtained by dissolving the cellulose material can be increased, thereby improving processibility of the molded body.

According to the manufacturing method for a cellulose molded body according to the fifteenth invention, in the fourteenth invention, the Kamlet-Taft parameter of hydrogen bond accepting ability (β value) of the cellulose-dissolving agent is 0.8 to 1.3. Thus, the cellulose material can be uniformly dissolved in a short time, without being dependent on the crystal form of the cellulose material and without undergoing a pretreatment step, and fluidity of the cellulose solution obtained by dissolving the cellulose material can be increased, thereby improving processibility of the molded body.

According to the manufacturing method for a cellulose molded body according to the sixteenth invention, in the fourteenth invention, the aprotic polar solvent is at least one selected from the group consisting of N,N-dimethylformamide, N,N-diethylformamide, N,N-dimethylacetamide, N,N-diethylacetamide, dimethyl sulfoxide, N-methyl-2-pyrrolidone, N,N'-dimethylpropyleneurea, 1,3-dimethyl-2-imidazolidinone, tetramethylurea, tetraethylurea, pyridine, 4-methylpyridine, and derivatives thereof, and thus is low-cost, can be easily procured, and is advantageous in terms of economy and mass production.

BRIEF DESCRIPTION OF DRAWINGS

FIG. 1 is a schematic process view of the manufacturing method for a cellulose molded body according to one embodiment of the present invention.

DESCRIPTION OF EMBODIMENTS

The manufacturing method for a cellulose molded body according to one embodiment of the present invention shown in FIG. 1 is a method for obtaining a low-crystalline cellulose molded body regardless of the xylose concentration in constituent sugars of the cellulose material, comprising a cellulose dissolution step, a molding step, and a drying step.

The cellulose molded body obtained by the manufacturing method of the present invention can be molded into an appropriate shape, but from the viewpoint of ease of manufacturing and product processing, is preferably molded into a form among any of fibrous form, film form, and spherical form. Particularly, the cellulose molded body in fibrous form is a so-called cellulose fiber, and can be widely used as a material for processed goods such as nonwoven fabrics. In the following description, the cellulose molded body will be described as a cellulose fiber (fibrous cellulose) unless specified otherwise.

The cellulose dissolution step is a step of dissolving a cellulose material in a cellulose-dissolving agent to obtain a cellulose solution. The cellulose material is a material comprising a cellulose component, and includes natural materials such as pulp and cotton, and processed materials such as paper products. Of natural materials, pulp is readily available and preferably used as the cellulose material. In the case of a processed material, among product-processed materials, it is preferable from the viewpoint of reducing environmental impact that discarded paper products be reused.

Pulp is a material in fibrous form obtained by pulverizing primarily wood material and removing impurities. Generally, as the pulp used as a raw material for low-crystalline cellulose molded bodies, pulp comprising cellulose and xylose as a constituent sugar in high concentrations, obtained by removing impurities such as lignin, is often used. In the manufacturing method for a cellulose molded body of the present invention, pulp comprising 0.1 to 20% by weight of xylose as a constituent sugar can be used as a raw material for the low-crystalline cellulose molded body. Specifically, in the manufacture of the low-crystalline cellulose molded body, in addition to pulp having low cellulose purity that is normally used, pulp having high cellulose purity can also be used. Therefore, not only is the range of raw materials used expanded, but also the range of applications of the resulting molded body can be expanded.

Xylose as a constituent sugar, when contained in the cellulose solution described below, hinders crystallization of cellulose during coagulation of the cellulose solution, and thus can be added to arbitrarily control the crystallization of the cellulose. A cellulose molded body having a high degree of crystallinity has increased stiffness and decreased transparency, whereas one having a low degree of crystallinity has flexibility and improved transparency. Thus, it is considered that the content may be appropriately adjusted depending on physical properties required for a desired cellulose molded body. In the following description, the cellulose material will be described as pulp.

The cellulose-dissolving agent is a solvent for dissolving a cellulose material such as pulp. Particularly, a dissolving agent capable of uniformly dissolving pulp in a short time, without being dependent on the crystal form thereof and without undergoing a pretreatment step, is used. The cellulose-dissolving agent, from the viewpoint of reducing environmental impact, preferably comprises a halogen as an anion. As the cellulose-dissolving agent, a solvent containing tetraalkylammonium acetate represented by the formula (Fi) below and an aprotic polar solvent is preferably used.

[Chem. 2]

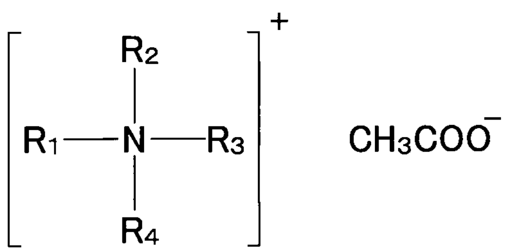

··· (F i)

In the formula (Fi), $R_1$, $R_2$, $R_3$, and $R_4$ are alkyl groups having 3 to 6 carbon atoms. $R_1$ to $R_4$ may be identical alkyl groups or different alkyl groups. If the alkyl group has 2 or less or 7 or more carbon atoms, there is a risk that solubility in the solvent for the pulp is decreased.

An evaluation index for solvent characteristics of the cellulose-dissolving agent includes the Kamlet-Taft parameters. The Kamlet-Taft parameters consist of three parameters: hydrogen bond acidity ($\alpha$), hydrogen bond basicity ($\beta$), and dipolarity/polarizability ($\pi$), and hydrogen bond basicity ($\beta$) is associated with cellulose-dissolving ability. The cellulose-dissolving ability required in the present invention is preferably such that the Kamlet-Taft parameter of hydrogen bond accepting ability ($\beta$) of the cellulose-dissolving agent is 0.8 to 1.3. The Kamlet-Taft parameter of hydrogen bond

accepting ability (β) of the cellulose-dissolving agent of 0.8 to 1.3 allows the cellulose material to be uniformly dissolved in a short time, without being dependent on the crystal form of the cellulose material and without undergoing a pretreatment step, and fluidity of the cellulose solution obtained by dissolving the cellulose material can be increased

Tetraalkylammonium acetate is a material for dissolving a cellulose material such as pulp more efficiently. For the tetraalkylammonium acetate, any one of tetrabutylammonium acetate, tetrapropylammonium acetate, tetrapentylammonium acetate, and tetrahexylammonium acetate or a plurality thereof combined is used.

Among the tetraalkylammonium acetates described above, tetrabutylammonium acetate has excellent dissolution efficiency of polysaccharides and thus is preferably selected. Tetrabutylammonium acetate is an ionic ammonium salt of acetic acid having an alkyl group with 4 carbon atoms, and has a good balance between affinity for hydrogen bonds and hydrophobicity as an organic substance. It is considered that due to this property, the compound infiltrates between crystalline cellulose molecules in the pulp to break the intermolecular and intramolecular hydrogen bonds, and hydrophobic groups in the molecules act to inhibit reagglomeration. Therefore, the crystals of the cellulose, which is the primary component of the pulp, can be more efficiently dissolved.

The aprotic polar solvent is a solvent for dissolving tetraalkylammonium acetate such as tetrabutylammonium acetate, which is a solid at room temperature. In addition, the aprotic polar solvent allows tetraalkylammonium acetate to achieve homogeneous dissolution in a short time, and lowers viscosity of the cellulose solution described below that is obtained by dissolving pulp, thereby allowing fluidity to be appropriately adjusted.

Tetraalkylammonium acetate constituting the cellulose-dissolving agent carries a strong electric charge, and thus easily bonds electrostatically through hydrogen bonds with pulp having a large number of hydroxyl groups in the molecule. If a protic solvent is used, interaction (hydrogen bonding) with tetraalkylammonium acetate occurs, which hinders the breaking of hydrogen bonds in the cellulose by tetraalkylammonium acetate, and thus an aprotic catalyst is desirable. If an apolar (nonpolar) solvent is used, dissolving tetraalkylammonium acetate is difficult, and thus a polar solvent is suitable. Therefore, for the solvent used in the cellulose-dissolving agent, an aprotic polar solvent is preferably used.

The blending ratio of tetraalkylammonium acetate, from the viewpoints of solubility and dissolution rate for the pulp, is 1% by weight to 45% by weight, preferably 5% by weight to 40% by weight, and more preferably 10% by weight to 35% by weight. If the blending ratio of tetraalkylammonium acetate is too small, there is a risk that the pulp cannot be sufficiently dissolved. If the blending ratio is too large, there is a risk that solubility and dissolution rate for the pulp are decreased.

It is preferable that the aprotic polar solvent have a strong hydrogen bond acceptor property and a solubility parameter similar to tetraalkylammonium acetate. In the aprotic polar solvent, the donor number is preferably 20 to 50, more preferably 25 to 40, and even more preferably 25 to 35. The donor number is one indicator that indicates basicity of a solvent, and is a value of heat of reaction (enthalpy) expressed as $-\Delta H$ (kcal/mol) when a solvent molecule reacts with 3 to 10 mol/L of a Lewis acid ($SbCl_5$) in a 1,2-dichloroethane solution. If the donor number is too small, there is a risk that the hydrogen bond acceptor property of the aprotic polar solvent is decreased, which decreases solubility of the pulp. If the donor number is too large, there is a risk that compatibility between the aprotic polar solvent and tetraalkylammonium acetate is decreased.

In the aprotic polar solvent, from the viewpoint of solubility of tetraalkylammonium acetate and pulp, at least one selected from amide-based solvents, sulfoxide-based solvents, and pyridine-based solvents is preferably used. Specifically, at least one selected from the group consisting of N,N-dimethylformamide, N,N-diethylformamide, N,N-dimethylacetamide, N,N-diethylacetamide, dimethyl sulfoxide, N-methyl-2-pyrrolidone, N,N'-dimethylpropyleneurea, 1,3-dimethyl-2-imidazolidinone (N,N'-dimethylethyleneurea), tetramethylurea, tetraethylurea, pyridine, 4-methylpyridine, and derivatives thereof is included. These are relatively low-cost and easy to procure, and thus are preferable from the viewpoint of economy and mass production.

Regarding the aprotic polar solvents listed above, the donor numbers, measured by the Gutmann method, are 26.6 for N,N-dimethylformamide; 30.9 for N,N-diethylformamide; 27.8 for N,N-dimethylacetamide; 32.2 for N,N-diethylacetamide; 29.8 for dimethyl sulfoxide; 27.3 for N-methyl-2-pyrrolidone; 29.3 for N,N'-dimethylpropyleneurea; 27.8 for 1,3-dimethyl-2-imidazolidinone; 31.0 for tetramethylurea; 28.0 for tetraethylurea; 33.1 for pyridine; and 31.5 for 4-methylpyridine.

These aprotic polar solvents can be used independently or in two or more. For example, when a combination of two or more is used, at least one is preferably an aprotic polar solvent in which the donor number is 20 to 50, and the other aprotic polar solvent in the combination may be an aprotic polar solvent that falls outside this range.

The content ratio of the aprotic polar solvent, from the viewpoint of reducing the content ratio of tetraalkylammonium acetate in the cellulose-dissolving agent to obtain high fluidity in the cellulose solution in which pulp is dissolved, is preferably 55% by weight or greater. When fluidity of the cellulose solution is increased, processability of the molded body is improved. The upper limit of the content ratio of the aprotic polar solvent is not particularly limited as long as tetraalkylammonium acetate is blended, even in a trace amount, provided that the total content is less than 100% by weight. The upper limit of the content ratio of the aprotic polar solvent, for example, is 90 to 99% by weight. If the content

ratio of the aprotic polar solvent is too small, the cellulose-dissolving agent assumes a slurry form and fluidity is decreased, and there is a risk that fluidity and homogeneity of the cellulose solution in which pulp is dissolved deteriorate. If the content ratio is too large, there is a risk that solubility of the pulp is decreased.

In the cellulose-dissolving agent, solubility and dissolution rate of the pulp and viscosity of the cellulose solution can be adjusted depending on the combination of tetraalkylammonium acetate and aprotic polar solvent used.

The mechanism by which the cellulose-dissolving agent dissolves pulp (cellulose) will be described. In the cellulose-dissolving agent, tetraalkylammonium acetate is dissociated by an aprotic polar solvent (in this example, dimethyl sulfoxide: DMSO) into a cation (tetraalkylammonium ion: $TAA^+$) represented by the formula (Fi) and an anion (acetate ion: $CH_3COO^-$), and oxygen in dimethyl sulfoxide (DMSO) and the tetraalkylammonium ion ($TAA^+$) interact to form a macrocation ($[DMSO+TAA]^+$).

In the pulp (cellulose) in the cellulose-dissolving agent, hydrogen bonds in the cellulose are broken by acetate ions ($CH_3COO^-$), and the cellulose is hydrogen-bonded to the acetate ions ($CH_3COO^-$). In addition, a weak interaction between oxygen in the cellulose and the macrocation ($[DMSO+TAA]^+$) is formed. As a result, cellulose is considered to be present in the dissolving agent in a form represented by the formula (Fii) below. Therefore, it is considered that the cellulose can be uniformly dissolved in a short time, without being dependent on the crystal form thereof and without undergoing a pretreatment step.

[Chem. 3]

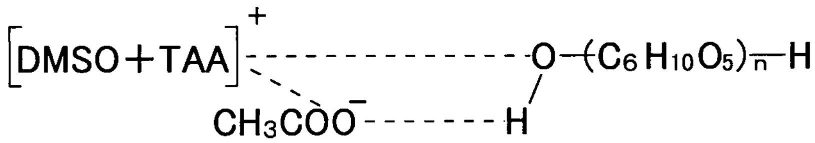

··· (Fii)

The cellulose solution is a solution obtained by dissolving a predetermined amount of pulp in the cellulose-dissolving agent described above. The pulp dissolved in the cellulose-dissolving agent is set depending on degree of polymerization and degree of crystallinity. From the viewpoint of production efficiency, such as the ability to easily prepare the cellulose solution with low effort and ease of coagulation, the amount added relative to the weight of the cellulose-dissolving agent is preferably at a concentration of approximately 3 to 15% by weight. If the concentration of the pulp is too diluted, the time required for coagulation in the molding step described below is increased, and there is a risk that handling during processing or treatment becomes difficult. If the concentration is too high, viscosity of the cellulose solution is increased, more time is required for dissolution of the pulp, a larger content of tetraalkylammonium acetate is necessary, and there is a risk of disadvantages in terms of economy and efficiency.

When dissolving pulp in the cellulose-dissolving agent, the dissolution temperature is preferably set to a relatively mild temperature condition. The lower limit value of the dissolution temperature, from the viewpoint of ensuring fluidity of the cellulose-dissolving agent and reactivity between the pulp and tetraalkylammonium acetate, is set to the solidification temperature of the aprotic polar solvent used or higher, for example, approximately 20°C. The upper limit value of the dissolution temperature, from the viewpoints of suppressing an excessive reaction between the pulp and tetraalkylammonium acetate to control the reaction and reducing the equipment required for heating, is set to, for example, 50°C. By having the temperature for dissolving the pulp in the cellulose-dissolving agent in a mild temperature range, the operation can be carried out at room temperature, or even in the case of heating, a simple heating apparatus is sufficient. Thus, no special heating equipment is required, and a reduction in cost of equipment required for production can be facilitated. In addition, evaporation of components of the cellulose-dissolving agent can be suppressed, and safety of the work environment is also improved. Although the reaction time can be shortened by increasing the dissolution temperature, it is not preferable to increase the dissolution temperature more than necessary, for the reasons of decomposition of the cellulose-dissolving agent and generation of a coloring substance due to side reaction.

In the cellulose solution, when dissolving pulp in the cellulose-dissolving agent, an additive such as an antioxidant, a plasticizer, a filler, an ultraviolet absorber, a pigment, an antistatic agent, or another polymeric material may be added as needed. The amount of the additive added is appropriately set depending on type and application of the additive.

The cellulose solution is prepared by adding each material such as pulp, cellulose-dissolving agent, and if necessary, an additive at a predetermined blending ratio and appropriately stirring. For the stirring of the materials, for example, mechanical stirring or ultrasonic vibration is suitable when the content of pulp is relatively small and fluidity of the cellulose solution is high, and a twin-screw extruder or a kneader is suitable when the content of pulp is relatively high and viscosity of the cellulose solution is high. The stirring time depends on the fluidity of the cellulose solution, for example, is preferably approximately 10 to 90 minutes. If the stirring time is too short, dissolving the pulp sufficiently is difficult. Since no improvement in physical properties is observed even if the stirring time is longer than necessary, the stirring is terminated

within an appropriate amount of time. By stirring the materials, dissolution of pulp is promoted, and uniformity of the solution can be improved. The dissolution of pulp may be carried out in an inert gas. As a result, a decrease in the degree of polymerization of cellulose in the pulp is suppressed.

The molding step is a step of molding the cellulose solution obtained in the cellulose dissolution step into a wet molded body (fibrous wet molded body), wherein the cellulose solution is discharged into an aqueous molding solution at 10 to 70°C to produce the wet molded body. The wet molded body (fibrous wet molded body) is an intermediate product of the cellulose molded body (cellulose fiber) ultimately obtained.

For the discharge of the cellulose solution, a known discharging apparatus is appropriately used depending on the form of the desired molded body. For example, when molding a cellulose fiber, a spunbond die or a melt flow die is used. When molding a cellulose film, a T-die or an inflation die is used. When molding a cellulose bead, an atomizer or a spray dryer is used.

The aqueous molding solution is an aqueous solution comprising 20 to 50% of a cellulose-dissolving agent identical to the cellulose-dissolving agent used in the cellulose dissolution step, and is brought into contact with the cellulose solution for coagulation. The material constituting the aqueous molding solution, in addition to the cellulose-dissolving agent, includes ion-exchanged water. If the content of the cellulose-dissolving agent is too small, coagulation rate of the discharged cellulose solution is high and crystallization of the cellulose proceeds easily, and thus there is a risk that the degree of crystallinity is excessively increased. If the content is too large, coagulation of the cellulose solution is insufficient, and there is a risk that molding becomes difficult.

As reaction conditions between the cellulose solution and the aqueous molding solution, the temperature condition is approximately 10 to 70°C, and preferably 10 to 40°C. If the temperature of the aqueous molding solution is too high, coagulation occurs rapidly, and thus there is a risk that density of the cellulose molded body is decreased, and the strength thereof is decreased. In addition, the energy cost to maintain the temperature of the aqueous molding solution is increased.

When the cellulose solution is discharged into the aqueous molding solution, the cellulose solution undergoes coagulation due to the aqueous molding solution, and a transparent wet molded body (fibrous wet molded body) consisting of cellulose components and remaining cellulose-dissolving agent is obtained. The components (tetraalkylammonium acetate and aprotic polar solvent) of the cellulose-dissolving agent eluted into the aqueous molding solution by separating from the cellulose are recovered by fractional distillation. After recovery, a treatment such as filtering and purification is carried out, enabling reuse as a cellulose-dissolving agent.

The drying step is a step of washing and then drying the wet molded body (fibrous wet molded body) obtained by the molding step to obtain a cellulose molded body (fibrous cellulose). In the washing of the wet molded body, a washing liquid such as water is brought into contact with the wet molded body in a room-temperature environment of approximately 20 to 30°C, whereby the cellulose-dissolving agent in the wet molded body is replaced with the washing water and separated. As the washing water, a solvent having high affinity for but no solubility with cellulose is preferable, and water, which is readily available, is particularly preferable. The washing, from the viewpoint of more reliably removing components other than cellulose from the wet molded body, is preferably carried out multiple times (approximately twice).

The wet molded body after washing is appropriately dried, whereby a cellulose molded body (fibrous cellulose) is obtained. The drying method is not particularly limited as long as the wet molded body after washing can be dried. For example, natural drying in room temperature or drying by a drying means such as a heated roll or hot air is appropriate. Since no exhaust gas is generated in this drying step, a treatment for exhaust gas such as sulfurizing gases that is carried out in the viscose method is not necessary.

In the manufacturing method for a cellulose molded body of the present invention, the cellulose-dissolving agent used for directly dissolving the cellulose material is separated from the cellulose component in the molding step as described above. Thus, the aqueous molding solution during the treatment step can be separated by fractional distillation into water and the cellulose-dissolving agent to be recovered, and the recovered cellulose-dissolving agent can be used again in the dissolution of a cellulose material. Therefore, when continuously manufacturing cellulose molded bodies, the amount of cellulose-dissolving agent used can be reduced by only replenishing the portion that is unavoidably consumed, which is economical and can facilitate a reduction in environmental impact.

In the manufacturing method for a cellulose molded body of the present invention, by bringing the cellulose solution in which the cellulose material is dissolved into contact with an aqueous molding solution in which the concentration of the cellulose-dissolving agent and aqueous solution temperature have been adjusted, a low-crystalline cellulose molded body can be easily molded. In the molding step, the cellulose solution is discharged into the aqueous molding solution by a discharging method that corresponds to a desired form such as fibrous form, film form, or spherical form, whereby a cellulose molded body in any form is obtained.

In the low-crystalline cellulose molded body of the present invention, various properties such as wet transparency, flexibility, dyeability, and chemical reactivity at post-processing are satisfactory. The degree of crystallinity of the cellulose molded body is preferably 60% or less. The degree of crystallinity indicates a ratio of crystal component in the cellulose molded body and affects physical properties such as transparency and strength. Since the crystal form in the

molded body is not constant, slight variations occur in the transparency of the cellulose molded body depending on the crystal form. However, in general, the lower the degree of crystallinity, the more the transparency of the cellulose molded body tends to improve.

The cellulose molded body obtained by the manufacturing method of the present invention has a type II cellulose crystal structure. Generally, natural cellulose materials such as pulp have a type I cellulose crystal structure. However, when a natural cellulose material is mercerized or dissolved in a cellulose-dissolving agent to undergo a regenerating process, the crystal structure is changed to that of type II cellulose. The degree of crystallinity can be calculated according to X-ray diffraction measurement using the formula (i) below. In the formula (i), Ic is the diffraction intensity of a crystal lattice plane ((1-10) plane, peak value near 2θ = 13°) of the type II cellulose, Ia1 is the diffraction intensity at an intersecting point between a straight line connecting diffraction intensities at 2θ = 8° and 15° and a straight line drawn vertically downward from 13°, and Ia2 is the diffraction intensity of an amorphous portion (2θ = 15°).

[Math. 2]

$$\text{Degree of crystallinity} = [(Ic - Ia1)/\{(Ic - Ia1 + Ia2)\}] \times 100\ (\%) \ldots \text{(i)}$$

The cellulose molded body, by having a degree of crystallinity at 60% or less, various properties such as wet transparency, flexibility, dyeability, and chemical reactivity at post-processing are further improved. Transparency of the cellulose molded body contributes to appearance properties. In a cellulose molded body having high transparency, designability and aesthetics are satisfactory, and products having a clean appearance can be obtained through product processing. As such, the cellulose molded body of the present invention is molded as a high-quality material having excellent transparency in any form. Therefore, the cellulose molded body, depending on the form thereof, can be suitably used as a molding material for a wide variety of cellulose products.

The low-crystalline cellulose molded body of the present invention, depending on the xylose concentration in constituent sugars of the cellulose material used, comprises 0.1 to 20% by weight of xylose as a constituent sugar. This includes not only low-crystalline cellulose molded bodies obtained from raw materials normally having low cellulose purity, but also low-crystalline cellulose molded bodies obtained from raw materials having high cellulose purity. A cellulose molded body molded with high-purity cellulose has a small amount of xylose as a constituent sugar in the molded body, and thus can form products that comply with safety standards such as the standard for distillation residues.

The cellulose molded body of the present invention has improved appearance properties, such as designability and aesthetics, from excellent transparency due to being low-crystalline, and is formed with high-purity cellulose, thus having excellent safety. Therefore, products having a clean appearance are obtained through product processing, and the cellulose molded body is useful as a molding material for a wide range of products such as cosmetics, such as face masks, and medical supplies, such as medical masks.

## EXAMPLES

### [Production of cellulose molded body]

In the production of the cellulose molded bodies of Prototype Examples 1 to 11, 1410 g of the cellulose-dissolving agent described below was charged into a 2 L separable flask, and 90 g of the cellulose material described below was added to the cellulose-dissolving agent. The mixture was dissolved in a hot water bath at 55°C under stirring with a stirrer (manufactured by Kobelco Eco-Solutions Co., Ltd.; "LOGBORN") to obtain a cellulose solution.

A cellulose-dissolving agent prepared to be identical to the cellulose-dissolving agent used in the dissolution of the cellulose material was used to prepare aqueous molding solutions having different blending ratios and aqueous solution temperatures. A gear pump (manufactured by Barmag; "Oerlikon") was used to discharge the cellulose solution into each of the aqueous molding solutions from a nozzle for coagulation to obtain a fibrous wet molded body. The obtained wet molded body was washed in running water and then air-dried to obtain each of the fibrous cellulose molded bodies of Prototype Examples 1 to 11.

### [Cellulose-dissolving agent]

28% by weight of tetrabutylammonium acetate (manufactured by Tokyo Chemical Industry Co., Ltd.) as the tetraalkylammonium acetate and 72% by weight of dimethyl sulfoxide (manufactured by Kishida Chemical Co., Ltd.) as the aprotic polar solvent were mixed to obtain a cellulose-dissolving agent.

The Kamlet-Taft parameter of hydrogen bond accepting ability (β value) of the obtained cellulose-dissolving agent was 1.1. The Kamlet-Taft parameter of hydrogen bond accepting ability (β value) was measured with reference to "Lauri K. J. Hauru et al., Biomarcomolecules 2012, 13, 2896-2905".

[Cellulose material]

- ·Pulp 1: dissolving pulp (manufactured by Oji Paper Co., Ltd.; "LDKP"), xylose concentration in constituent sugars of 1.9%
- ·Pulp 2: dissolving pulp (manufactured by Nippon Paper Industries Co., Ltd.: "LBKP"), xylose concentration in constituent sugars of 17.1%
- ·Pulp 3: cotton linter pulp (manufactured by Buckeye Technologies Inc.), xylose concentration in constituent sugars of 0.3%

[Prototype Example 1]

Prototype Example 1 was a fibrous cellulose molded body obtained by coagulating a cellulose solution of pulp 1 (xylose concentration in constituent sugars of 1.9%) with an aqueous molding solution having a concentration of 20% and an aqueous solution temperature of 10°C.

[Prototype Example 2]

Prototype Example 2 was a fibrous cellulose molded body obtained by coagulating a cellulose solution of pulp 2 (xylose concentration in constituent sugars of 17.1%) with an aqueous molding solution having a concentration of 20% and an aqueous solution temperature of 20°C.

[Prototype Example 3]

Prototype Example 3 was a fibrous cellulose molded body obtained by coagulating a cellulose solution of pulp 1 (xylose concentration in constituent sugars of 1.9%) with an aqueous molding solution having a concentration of 20% and an aqueous solution temperature of 70°C.

[Prototype Example 4]

Prototype Example 4 was a fibrous cellulose molded body obtained by coagulating a cellulose solution of pulp 3 (xylose concentration in constituent sugars of 0.3%) with an aqueous molding solution having a concentration of 20% and an aqueous solution temperature of 70°C.

[Prototype Example 5]

Prototype Example 5 was a fibrous cellulose molded body obtained by coagulating a cellulose solution of pulp 2 (xylose concentration in constituent sugars of 17.1%) with an aqueous molding solution having a concentration of 50% and an aqueous solution temperature of 20°C.

[Prototype Example 6]

Prototype Example 6 was a fibrous cellulose molded body obtained by coagulating a cellulose solution of pulp 1 (xylose concentration in constituent sugars of 1.9%) with an aqueous molding solution having a concentration of 50% and an aqueous solution temperature of 70°C.

[Prototype Example 7]

Prototype Example 7 was a fibrous cellulose molded body obtained by coagulating a cellulose solution of pulp 1 (xylose concentration in constituent sugars of 1.9%) with an aqueous molding solution having a concentration of 10% and an aqueous solution temperature of 10°C.

[Prototype Example 8]

Prototype Example 8 was a fibrous cellulose molded body obtained by coagulating a cellulose solution of pulp 1 (xylose concentration in constituent sugars of 1.9%) with an aqueous molding solution having a concentration of 20% and an aqueous solution temperature of 5°C.

[Prototype Example 9]

Prototype Example 9 was a fibrous cellulose molded body obtained by coagulating a cellulose solution of pulp 1 (xylose concentration in constituent sugars of 1.9%) with an aqueous molding solution having a concentration of 0% (comprising no cellulose-dissolving agent) and an aqueous solution temperature of 5°C.

[Prototype Example 10]

Prototype Example 10 was a fibrous cellulose molded body obtained by coagulating a cellulose solution of pulp 1 (xylose concentration in constituent sugars of 1.9%) with an aqueous molding solution having a concentration of 0% (comprising no cellulose-dissolving agent) and an aqueous solution temperature of 10°C.

[Prototype Example 11]

Prototype Example 11 was a fibrous cellulose molded body obtained by coagulating a cellulose solution of pulp 1 (xylose concentration in constituent sugars of 1.9%) with an aqueous molding solution having a concentration of 0% (comprising no cellulose-dissolving agent) and an aqueous solution temperature of 20°C.

For the fibrous cellulose molded bodies of Prototype Examples 1 to 11, xylose concentration in constituent sugars, degree of crystallinity, and wet transparency were tested, and quality were determined. Regarding the cellulose molded bodies of Prototype Examples 1 to 11, the xylose concentration in constituent sugars of cellulose material, concentration of cellulose-dissolving agent in aqueous molding solution, aqueous solution temperature, and test results of xylose concentration in constituent sugars, degree of crystallinity, and transparency of the molded bodies are each shown in Table 1 described below.

[Measurement of xylose concentration in constituent sugars]

The fibrous cellulose molded bodies of Prototype Examples 1 to 11 were each dissolved in 72% by weight of sulfuric acid in a water bath at 30°C. Water was added to dilute the sulfuric acid to 4.5% by weight and a treatment in an oil bath at 120°C was carried out for 15 minutes to hydrolyze sugar components in the cellulose molded body into monosaccharides. The xylose concentration (%) in the hydrolyzed solution was measured using high performance liquid chromatography (HPLC) (manufactured by Shimadzu Corporation; "Prominence"). For separation of sugars, a ligand exchange chromatography column (manufactured by Shoko Science Co., Ltd.; "SUGAR SP0810") was used.

[Measurement of degree of crystallinity]

The degree of crystallinity (%) of cellulose was calculated using the formula (i) described above according to wide-angle X-ray diffraction (WAXD) measurement using an automated multipurpose X-ray diffractometer (manufactured by Rigaku Corporation; "SmartLab"). Conditions were measurement angle of 2θ = 5 to 40°; voltage of 40 kV; and current of 30 mA.

[Test of wet transparency]

For the fibrous cellulose molded bodies of Prototype Examples 1 to 11, fibers cut to a length of 50 mm were dispersed in water to form a slurry-like substance, and then subjected to suction filtration to produce a test specimen in short-fiber cylindrical sheet form. In the production of each test specimen, basis weight was adjusted so as to be 55 g/$m^2$. Ion-exchanged water was dropped onto the obtained test specimen in short-fiber cylindrical sheet form to uniformly moisten the entire specimen, and the moistened test specimen was placed on a sheet printed with black characters to visually determine visual recognizability (transparency level) of the characters. In the determination of transparency, a case where visual recognizability of the characters is high (characters are clearly visible) was rated as "pass (good)", and a case where visual recognizability is low (characters are not clearly visible) was rated as "fail (poor)".

[Table 1]

| | Cellulose material | | Aqueous molding solution | | Cellulose molded body | | |
|---|---|---|---|---|---|---|---|
| | Pulp type | Xylose concentration in constituent sugars (%) | Cellulose-dissolving agent concentration (%) | Temperature (°C) | Xylose concentration in constituent sugars (%) | Degree of crystallinity (%) | Transparency |
| Prototype Example 1 | Pulp 1 | 1.9 | 20 | 10 | 1.8 | 55.6 | Pass |
| Prototype Example 2 | Pulp 2 | 17.1 | 20 | 20 | 16.2 | 41.5 | Pass |
| Prototype Example 3 | Pulp 1 | 1.9 | 20 | 70 | 1.8 | 16.7 | Pass |
| Prototype Example 4 | Pulp 3 | 0.3 | 20 | 70 | 0.4 | 26.7 | Pass |
| Prototype Example 5 | Pulp 2 | 17.1 | 50 | 20 | 16.2 | 38.5 | Pass |
| Prototype Example 6 | Pulp 1 | 1.9 | 50 | 70 | 1.8 | 10.0 | Pass |
| Prototype Example 7 | Pulp 1 | 1.9 | 10 | 10 | 1.8 | 60.4 | Fail |
| Prototype Example 8 | Pulp 1 | 1.9 | 20 | 5 | 1.8 | 60.9 | Fail |
| Prototype Example 9 | Pulp 1 | 1.9 | 0 | 5 | 1.8 | 63.6 | Fail |
| Prototype Example 10 | Pulp 1 | 1.9 | 0 | 10 | 1.8 | 60.6 | Fail |
| Prototype Example 11 | Pulp 1 | 1.9 | 0 | 20 | 1.8 | 60.8 | Fail |

[Results and observations]

When comparing Prototype Examples 1, 3, and 8 (material: pulp 1, concentration: 20%), wherein the cellulose material and the cellulose-dissolving agent concentration in the aqueous molding solution were identical, the tendency that a higher temperature of the aqueous molding solution results in a lower degree of crystallinity of a cellulose molded body was observed. The reason therefor is considered that when a cellulose solution undergoes coagulation in a high-temperature aqueous solution comprising a cellulose-dissolving agent, the rate at which solids precipitate from the cellulose solution is high, cellulose is precipitated before crystal lattices are formed, non-crystalline portion is increased, and degree of crystallinity is decreased. In Prototype Example 8, wherein the temperature of the aqueous molding solution was 5°C, visual recognizability of the characters on which the test specimen was placed was low, and transparency was insufficient.

When comparing Prototype Examples 1, 7, and 10 (material: pulp 1, temperature: 10°C), Prototype Examples 2 and 5 (material: pulp 2, temperature: 20°C), Prototype Examples 3 and 6 (material: pulp 1, temperature: 70°C), and Prototype Examples 8 and 9 (material: pulp 1, temperature: 5°C), wherein the cellulose material and the temperature of the aqueous molding solution were identical within each group, the tendency that a higher cellulose-dissolving agent concentration in the aqueous molding solution results in a lower degree of crystallinity was exhibited. The reason therefor is considered that when a cellulose solution undergoes coagulation in an aqueous solution comprising a high concentration of a cellulose-dissolving agent, the rate at which the cellulose-dissolving agent separates from the cellulose solution is slow, the cellulose-dissolving agent hinders crystallization of cellulose, and degree of crystallinity is decreased. In Prototype Examples 9, 10, and 11, wherein the aqueous molding solution comprised no cellulose-dissolving agent,

regardless of the temperature of the aqueous molding solution, all exhibited low visual recognizability of the characters on which the test specimen was placed and insufficient transparency. Even in Prototype Example 7, wherein the concentration of the cellulose-dissolving agent was 10%, transparency was insufficient.

When comparing Prototype Examples 3 and 4 (concentration: 20%, temperature: 70°C), wherein the cellulose-dissolving agent concentration in the aqueous molding solution and the temperature of the aqueous molding solution were identical, the tendency that a higher xylose concentration in constituent sugars of the cellulose material results in a lower degree of crystallinity was observed. The reason therefor is considered that when a cellulose solution coagulates, xylose contained as a constituent sugar hinders crystallization of cellulose, and thus degree of crystallinity is decreased. It was found that in the manufacturing method of the present invention, not only low-purity cellulose materials that are normally used but also high-purity cellulose materials can be used. The xylose concentrations in constituent sugars of the fibrous cellulose molded bodies of Prototype Examples 1 to 11 were all 0.1 to 20% by weight, which were relatively close to the xylose concentration in constituent sugars of the raw material pulp. Since xylose in constituent sugars of the raw material was contained in the molded bodies with almost no loss during the dissolution, molding, and drying processes, it was found that the xylose concentration in constituent sugars of a molded body depends on the xylose concentration in constituent sugars of a raw material.

In the cellulose molded bodies of Prototype Examples 1 to 11, Prototype Examples 1 to 6 had excellent transparency, and thus can be suitably used as materials for cellulose products. Since the degree of crystallinity of each of Prototype Examples 1 to 6 is 60% or less, properties such as flexibility, dyeability, and chemical reactivity at post-processing are also satisfactory.

Concluding comprehensively from the comparison of the cellulose molded bodies of Prototype Examples 1 to 11, conditions of the manufacturing method for a cellulose molded body of the present invention are preferably set to 10°C or higher for the temperature of the aqueous molding solution and 20% or greater for the concentration of the cellulose-dissolving agent in the aqueous molding solution. Taking into consideration the cost of temperature maintenance and the ease of coagulation of the cellulose solution, it is considered preferable that the temperature of the aqueous molding solution be approximately 10 to 70°C, and the concentration of the cellulose-dissolving agent be approximately 20 to 50%. The cellulose material that can be used in the manufacturing method of the present invention can be broadly selected from low-purity cellulose materials to high-purity cellulose materials, as described above. Specifically, a cellulose material having a xylose concentration in constituent sugars of approximately 0.1 to 20% by weight can be selected.

From the foregoing, according to the manufacturing method of the present invention, by appropriately adjusting the cellulose-dissolving agent concentration and temperature in the aqueous molding solution to within the ranges described above, a low-crystalline cellulose molded body having excellent transparency can be manufactured from raw materials having a wide range of purity. Since cellulose purity of a cellulose molded body depends on cellulose purity of the raw material, obtaining a high-purity and low-crystallinity molded body in techniques of the prior art was difficult. However, by using the manufacturing method of the present invention, it is possible to mold a high-purity and low-crystallinity molded body to provide a cellulose molded body in which both safety and various properties are achieved.

## INDUSTRIAL APPLICABILITY

In the manufacturing method for a cellulose molded body of the present invention, obtaining a low-crystalline cellulose molded body having high cellulose purity, in addition to a low-crystalline cellulose molded body having low cellulose purity of the prior art, is possible. Particularly, the high-purity low-crystalline cellulose molded body can provide product materials that comply with various safety tests. The obtained low-crystalline cellulose molded body has high transparency and excellent flexibility and dyeability, and thus can be widely used in cosmetics, textiles, and packaging. The molded body, in the case of a film, has improved affinity with reactive agents such as laminating and surface coating agents, and properties as a film are improved. The molded body, in the case of a bead, has improved reactivity with a hydrophobic coating agent that is necessary when blending into a foundation, and properties as a bead is improved. Further, the obtained cellulose molded body can be suitably used as an industrial raw material having excellent chemical reactivity.

## Claims

**1.** A manufacturing method for a cellulose molded body,

wherein a cellulose material is pulp primarily composed of cellulose, and comprises 0.1 to 20% by weight of xylose as a constituent sugar,
the manufacturing method comprising
a cellulose dissolution step of dissolving the cellulose material in a cellulose-dissolving agent to obtain a cellulose

solution;
a molding step of discharging the cellulose solution into an aqueous molding solution at 10 to 70°C comprising 20 to 50% of the cellulose-dissolving agent to produce a wet molded body; and
a drying step of washing and then drying the wet molded body to obtain a cellulose molded body in which degree of crystallinity, represented by formula (i) below, is 60% or less:
[Math. 1]

$$\text{Degree of crystallinity} = [(Ic - Ia1)/\{(Ic - Ia1 + Ia2)\}] \times 100\ (\%) \ldots \text{(i)}$$

Ic: diffraction intensity of crystal lattice plane ((1-10) plane, peak value near 2θ = 13°) of type II cellulose;
Ia1: diffraction intensity at intersecting point between a straight line connecting diffraction intensities at 2θ = 8° and 15° and a straight line drawn vertically downward from 13°; and
Ia2: diffraction intensity of amorphous portion (2θ = 15°).

**2.**

**3.** The manufacturing method for a cellulose molded body according to claim 1 or 2, wherein the cellulose-dissolving agent contains tetraalkylammonium acetate represented by formula (Fi) below and an aprotic polar solvent, and wherein content ratio of the aprotic polar solvent is 55% by weight or greater:

[Chem. 1]

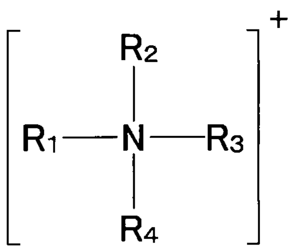

$CH_3COO^-$ ··· (F i)

wherein $R_1$, $R_2$, $R_3$, and $R_4$ each independently represent an alkyl group having 3 to 6 carbon atoms.

**4.** The manufacturing method for a cellulose molded body according to claim 3, wherein a Kamlet-Taft parameter of hydrogen bond accepting ability (β value) of the cellulose-dissolving agent is 0.8 to 1.3.

**5.** The manufacturing method for a cellulose molded body according to claim 3, wherein the tetraalkylammonium acetate is tetrabutylammonium acetate.

**6.** The manufacturing method for a cellulose molded body according to claim 3, wherein donor number of the aprotic polar solvent is 20 to 50.

**7.** The manufacturing method for a cellulose molded body according to claim 3, wherein the aprotic polar solvent is at least one selected from amide-based solvents, sulfoxide-based solvents, and pyridine-based solvents.

**8.** The manufacturing method for a cellulose molded body according to claim 3, wherein the aprotic polar solvent is at least one selected from a group consisting of N,N-dimethylformamide, N,N-diethylformamide, N,N-dimethylacetamide, N,N-diethylacetamide, dimethyl sulfoxide, N-methyl-2-pyrrolidone, N,N'-dimethylpropyleneurea, 1,3-dimethyl-2-imidazolidinone, tetramethylurea, tetraethylurea, pyridine, 4-methylpyridine, and derivatives thereof.

**9.** The manufacturing method for a cellulose molded body according to claim 1, wherein the cellulose molded body is in a form among any of fibrous form, film form, and spherical form.

**10.** The manufacturing method for a cellulose molded body according to claim 3, wherein the cellulose molded body is in a form among any of fibrous form, film form, and spherical form.

**11.** The manufacturing method for a cellulose molded body according to claim 8, wherein the cellulose molded body is in a form among any of fibrous form, film form, and spherical form.

**12.** A cellulose molded body obtained via

a cellulose dissolution step of dissolving a cellulose material in a cellulose-dissolving agent to obtain a cellulose solution,
wherein the cellulose material is pulp primarily composed of cellulose, and comprises 0.1 to 20% by weight of xylose as a constituent sugar;
a molding step of discharging the cellulose solution into an aqueous molding solution at 10 to 70°C comprising 20 to 50% of the cellulose-dissolving agent to produce a wet molded body; and
a drying step of washing and then drying the wet molded body,
wherein the cellulose molded body comprises 0.1 to 20% by weight of xylose as a constituent sugar, and wherein degree of crystallinity, represented by formula (i) above, of the cellulose molded body is 60% or less.

**13.**

**14.** The cellulose molded body according to claim 12 or 13, wherein the cellulose-dissolving agent contains tetraalkylammonium acetate represented by formula (Fi) above and an aprotic polar solvent, and wherein content ratio of the aprotic polar solvent is 55% by weight or greater.

**15.** The cellulose molded body according to claim 14, wherein a Kamlet-Taft parameter of hydrogen bond accepting ability (β value) of the cellulose-dissolving agent is 0.8 to 1.3.

**16.** The cellulose molded body according to claim 14, wherein the aprotic polar solvent is at least one selected from a group consisting of N,N-dimethylformamide, N,N-diethylformamide, N,N-dimethylacetamide, N,N-diethylacetamide, dimethyl sulfoxide, N-methyl-2-pyrrolidone, N,N'-dimethylpropyleneurea, 1,3-dimethyl-2-imidazolidinone, tetramethylurea, tetraethylurea, pyridine, 4-methylpyridine, and derivatives thereof.

**Amended claims under Art. 19.1 PCT**

**1.** A manufacturing method for a cellulose molded body,

the manufacturing method comprising
a cellulose dissolution step of dissolving a cellulose material in a cellulose-dissolving agent to obtain a cellulose solution;
a molding step of discharging the cellulose solution into an aqueous molding solution at 10 to 70°C comprising 20 to 50% of the cellulose-dissolving agent to produce a wet molded body; and
a drying step of washing and then drying the wet molded body to obtain a cellulose molded body.

**2.** The manufacturing method for a cellulose molded body according to claim 1, wherein the cellulose material is pulp primarily composed of cellulose, and comprises 0.1 to 20% by weight of xylose as a constituent sugar.

**3.** The manufacturing method for a cellulose molded body according to claim 1 or 2, wherein the cellulose-dissolving agent contains tetraalkylammonium acetate represented by formula (Fi) below and an aprotic polar solvent, and wherein content ratio of the aprotic polar solvent is 55% by weight or greater:

[Chem. 1]

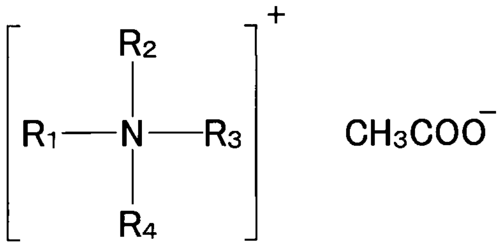 ··· (F i)

wherein $R_1$, $R_2$, $R_3$, and $R_4$ each independently represent an alkyl group having 3 to 6 carbon atoms.

**4.** The manufacturing method for a cellulose molded body according to claim 3, wherein a Kamlet-Taft parameter of

hydrogen bond accepting ability (β value) of the cellulose-dissolving agent is 0.8 to 1.3.

**5.** The manufacturing method for a cellulose molded body according to claim 3, wherein the tetraalkylammonium acetate is tetrabutylammonium acetate.

**6.** The manufacturing method for a cellulose molded body according to claim 3, wherein donor number of the aprotic polar solvent is 20 to 50.

**7.** The manufacturing method for a cellulose molded body according to claim 3, wherein the aprotic polar solvent is at least one selected from amide-based solvents, sulfoxide-based solvents, and pyridine-based solvents.

**8.** The manufacturing method for a cellulose molded body according to claim 3, wherein the aprotic polar solvent is at least one selected from a group consisting of N,N-dimethylformamide, N,N-diethylformamide, N,N-dimethylacetamide, N,N-diethylacetamide, dimethyl sulfoxide, N-methyl-2-pyrrolidone, N,N'-dimethylpropyleneurea, 1,3-dimethyl-2-imidazolidinone, tetramethylurea, tetraethylurea, pyridine, 4-methylpyridine, and derivatives thereof.

**9.** The manufacturing method for a cellulose molded body according to claim 1, wherein the cellulose molded body is in a form among any of fibrous form, film form, and spherical form.

**10.** The manufacturing method for a cellulose molded body according to claim 3, wherein the cellulose molded body is in a form among any of fibrous form, film form, and spherical form.

**11.** The manufacturing method for a cellulose molded body according to claim 8, wherein the cellulose molded body is in a form among any of fibrous form, film form, and spherical form.

**12.** A cellulose molded body obtained via

a cellulose dissolution step of dissolving a cellulose material in a cellulose-dissolving agent to obtain a cellulose solution,
a molding step of discharging the cellulose solution into an aqueous molding solution at 10 to 70°C comprising 20 to 50% of the cellulose-dissolving agent to produce a wet molded body; and
a drying step of washing and then drying the wet molded body,
wherein degree of crystallinity, represented by formula (i) below, of the cellulose molded body is 60% or less:
[Math. 1]

$$\text{Degree of crystallinity} = [(Ic - Ia1)/\{(Ic - Ia1 + Ia2)\}] \times 100\ (\%) \ldots \text{(i)}$$

Ic: diffraction intensity of crystal lattice plane ((1-10) plane, peak value near 2θ = 13°) of type II cellulose;
Ia1: diffraction intensity at intersecting point between a straight line connecting diffraction intensities at 2θ = 8° and 15° and a straight line drawn vertically downward from 13°; and
Ia2: diffraction intensity of amorphous portion (2θ = 15°).

**13.** The cellulose molded body according to claim 12, wherein the cellulose molded body comprises 0.1 to 20% by weight of xylose as a constituent sugar.

**14.** The cellulose molded body according to claim 12 or 13, wherein the cellulose-dissolving agent contains tetraalkylammonium acetate represented by formula (Fi) above and an aprotic polar solvent, and wherein content ratio of the aprotic polar solvent is 55% by weight or greater.

**15.** The cellulose molded body according to claim 14, wherein a Kamlet-Taft parameter of hydrogen bond accepting ability (β value) of the cellulose-dissolving agent is 0.8 to 1.3.

**16.** The cellulose molded body according to claim 14, wherein the aprotic polar solvent is at least one selected from a group consisting of N,N-dimethylformamide, N,N-diethylformamide, N,N-dimethylacetamide, N,N-diethylacetamide, dimethyl sulfoxide, N-methyl-2-pyrrolidone, N,N'-dimethylpropyleneurea, 1,3-dimethyl-2-imidazolidinone, tetramethylurea, tetraethylurea, pyridine, 4-methylpyridine, and derivatives thereof.

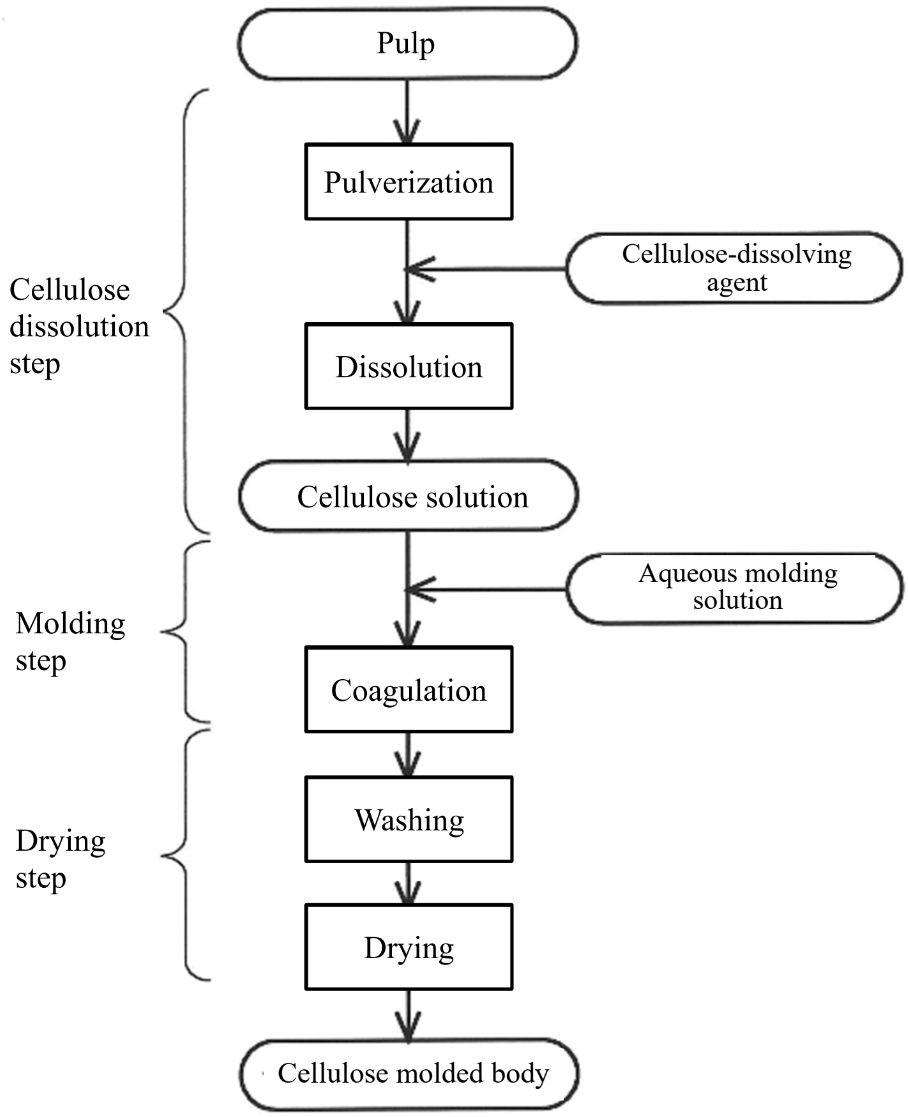
Pulp
Pulverization
Cellulose-dissolving agent
Cellulose dissolution step
Dissolution
Cellulose solution
Aqueous molding solution
Molding step
Coagulation
Washing
Drying step
Drying
Cellulose molded body

## INTERNATIONAL SEARCH REPORT

International application No.
**PCT/JP2024/009417**

**A. CLASSIFICATION OF SUBJECT MATTER**

***B29C 67/06***(2017.01)i; ***A61K 8/02***(2006.01)i; ***A61K 8/40***(2006.01)i; ***A61K 8/73***(2006.01)i; ***C08B 16/00***(2006.01)i; ***C08J 5/18***(2006.01)i; ***D01F 2/00***(2006.01)i; ***D01F 2/02***(2006.01)i
FI: B29C67/06; A61K8/02; A61K8/40; A61K8/73; C08B16/00; C08J5/18 CEP; D01F2/00 Z; D01F2/02

According to International Patent Classification (IPC) or to both national classification and IPC

**B. FIELDS SEARCHED**

Minimum documentation searched (classification system followed by classification symbols)

B29C67/06; A61K8/00-8/99; A61Q1/00-90/00; C08B1/00-37/18; C08J5/00-5/02; C08J5/12-5/22; D01F1/00-6/96; D01F9/00-9/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2013/176138 A1 (BRIDGESTONE CORPORATION) 28 November 2013 (2013-11-28) paragraphs [0070]-[0312] | 1, 7-9, 11 |
| Y | | 2-6, 10, 12-16 |
| X | WO 2014/189080 A1 (BRIDGESTONE CORPORATION) 27 November 2014 (2014-11-27) paragraphs [0019]-[0097] | 1, 7-9, 11 |
| Y | | 2-6, 10, 12-16 |
| Y | WO 2020/027090 A1 (DAICEL CORP.) 06 February 2020 (2020-02-06) paragraph [0030] | 2-6, 10, 12-16 |
| Y | WO 2012/128315 A1 (KRI, INC.) 27 September 2012 (2012-09-27) paragraphs [0013]-[0050] | 3-6, 10, 14-15 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 May 2024** | **21 May 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

**INTERNATIONAL SEARCH REPORT**

International application No.
**PCT/JP2024/009417**

**C. DOCUMENTS CONSIDERED TO BE RELEVANT**

| Category* | Citation of document, with indication, where appropriate, of the relevant passages | Relevant to claim No. |
|---|---|---|
| Y | JP 2006-137677 A (NATIONAL UNIVERSITY CORPORATION TOKYO UNIVERSITY OF AGRICULTURE AND TECHNOLOGY) 01 June 2006 (2006-06-01) paragraph [0013] | 4, 15 |

Form PCT/ISA/210 (second sheet) (July 2022)

**INTERNATIONAL SEARCH REPORT**
**Information on patent family members**

International application No.
**PCT/JP2024/009417**

| Patent document cited in search report | Publication date (day/month/year) | Patent family member(s) | Publication date (day/month/year) |
|---|---|---|---|
| WO 2013/176138 A1 | 28 November 2013 | US 2015/0148458 A1<br>paragraphs [0165]-[0421]<br>EP 2853624 A1<br>KR 10-2014-0145630 A<br>CN 104471121 A<br>JP 2013-241702 A<br>JP 2013-241703 A<br>JP 2013-241704 A<br>JP 2013-241710 A<br>JP 2013-241530 A<br>JP 2013-241711 A | |
| WO 2014/189080 A1 | 27 November 2014 | US 2016/0168757 A1<br>paragraphs [0026]-[0176]<br>EP 3000919 A1<br>CN 105229209 A<br>JP 2014-227619 A | |
| WO 2020/027090 A1 | 06 February 2020 | JP 2020-19887 A | |
| WO 2012/128315 A1 | 27 September 2012 | US 2014/0024823 A1<br>paragraphs [0030]-[0076]<br>EP 2690132 A1<br>CN 103502344 A<br>JP 2012-211302 A | |
| JP 2006-137677 A | 01 June 2006 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011184541 A, Kokai
- JP 2015074704 A, Kokai
- JP 2015093876 A, Kokai
- JP 2016196526 A, Kokai
- JP 2021517214 W, Kohyo


### Non-patent literature cited in the description


- **LAURI K. J. HAURU et al.** *Biomarcomolecules*, 2012, vol. 13, 2896-2905